(19) Europäisches Patentamt
European Patent Office
Office européen des brevets

(11) EP 0 725 044 A1

(12) **EUROPEAN PATENT APPLICATION**
published in accordance with Art. 158(3) EPC

(43) Date of publication:
**07.08.1996 Bulletin 1996/32**

(21) Application number: **94930344.0**

(22) Date of filing: **20.10.1994**

(51) Int. Cl.$^6$: **C04B 28/16**, C04B 24/26

(86) International application number:
**PCT/JP94/01767**

(87) International publication number:
**WO 95/11204 (27.04.1995 Gazette 1995/18)**

(84) Designated Contracting States:
**DE DK ES FR GB IT SE**

(30) Priority: **21.10.1993 JP 263613/93**
**31.03.1994 JP 62845/94**

(71) Applicants:
- **Chichibu Onoda Cement Corporation**
  **Minato-ku, Tokyo (JP)**
- **Takemoto Yushi Kabushiki Kaisha**
  **Gamagouri-shi Aichi-ken (JP)**

(72) Inventors:
- **SOEDA, Koichi**
  **Central Research Laboratory**
  **Sakura-shi Chiba 285 (JP)**
- **HAYASHI, Hiroshi**
  **Central Research Laboratory**
  **Sakura-shi Chiba 285 (JP)**
- **MATSUHISA, Makoto**
  **Central Research Laboratory**
  **Sakura-shi Chiba 285 (JP)**
- **SATO, Kazuhiro**
  **Central Research Laboratory**
  **Sakura-shi Chiba 285 (JP)**
- **ASHIYAHARA, Satoru**
  **Central Research Laboratory**
  **Sakura-shi Chiba 285 (JP)**
- **TSUCHIYA, Kazuyoshi**
  **Central Research Laboratory**
  **Sakura-shi Chiba 285 (JP)**
- **HOSONO, Katsuo**
  **Central Research Laboratory**
  **Sakura-shi Chiba 285 (JP)**
- **KINOSHITA, Mitsuo**
  **Toyokawa-shi Aichi 442 (JP)**
- **MIURA, Yoshimasa**
  **Nishio-shi Aichi 445 (JP)**

(74) Representative: **Goddar, Heinz J., Dr. et al**
**FORRESTER & BOEHMERT**
**Franz-Joseph-Strasse 38**
**80801 München (DE)**

# (54) SELF-LEVELING WATER-BASE COMPOSITION

(57) The present invention relates to a self-leveling aqueous composition comprising 100 parts by weight of a base material which is a mixture of cement and natural type-II anhydrous gypsum which are mixed in a weight ratio from 40/60 to 80/20, 0.1 to 3 parts by weight of an acrylic dispersant or a dispersant mixture which contains 0.1 to 3 parts by weight of an acrylic dispersant and 0.1 to 2 parts by weight of a melamine dispersant; 0.01 to 0.6 parts by weight of a thickener; 0.01 to 0.6 parts by weight of a defoaming agent; 0.05 to 1 part by weight of a setting accelerator; 0.2 to 6 parts by weight of a shrinkage inhibitor; 30 to 300 parts by weight of an aggregate; and 30 to 60 parts by weight of water.

The self-leveling aqueous composition has excellent characteristics in that it generates only very little changes in length, does not generate cracks or separate from the substrate, and has high waterproofing performance, without being affected by environmental conditions or thickness of the installation. In addition, it maintains a high fluidity for a long period. Accordingly, it is possible to manufacture the composition in a factory, and transport it to the working site by an agitator truck for pouring on the substrate. Thus, the compositions of the present invention are excellent from the viewpoints of quality and working efficiency.

EP 0 725 044 A1

## Description

Technical Field:

The present invention relates to a self-leveling aqueous composition for making a horizontal floor surface in a building. More particularly, the present invention relates to a self-leveling aqueous composition which maintains high fluidity for a long time, and which thus can be transported to a working site by an agitator truck while being agitated before working.

Background Art:

Recently, ready-mixed self-leveling materials (hereinafter referred to as ready-mixed SL materials) have been developed which are capable of achieving improvements in quality control and large-scale placement, and they have become of interest in this technical field. Ready-mixed SL materials are mixed by kneading in a special plant for them and are transported by an agitator truck to a working site where they are to be used. Therefore, they are required to have a pot life of 6 to 7 hours during which high fluidity can be constantly maintained. In addition, since a working schedule requires that a surface of a self-leveling material which has been installed be set to an extent permitting work thereon on the day following installation, the final setting time is required to be at most 20 hours, and desirably at most 15 hours.

A ready-mixed SL material which has a long term pot life and which provides a surface which is hard enough for work thereon on the following day is disclosed, for example, in Japanese Patent Application Laid-open (kokai) No. 4-209,737. The material disclosed in that publication, however, has the drawbacks that cracks are not satisfactorily prevented from occurring after the material has set, and that separation from the substrate is not sufficiently prevented.

Conventionally, two groups of self-leveling materials, a gypsum-type group and a cement-type group, have been known. Gypsum-type materials produce less cracks owing to their small drying shrinkage, but have a drawback in that they cannot be used for areas in which water is used because of their poor waterproofing property. By contrast, cement-type materials have excellent waterproofing properties, but are liable to produce cracks due to drying shrinkage. In order to prevent generation of cracks, a method has been proposed in which an expansive additive of a lime type material, calcium aluminate type material, etc. is added to a cement-type SL material (Japanese Patent Publication (kokoku) No. 64-1425). However, this method involves a high risk of causing separation of the material from the substrate or producing cracks under highly humid conditions, because humid conditions allow the material to expand excessively. Moreover, if the material placed on the substrate has a large thickness, cracks or separation attributed to the difference in length change at the upper and lower parts of the SL material easily occur. There is another proposal in which a lower alcohol alkyleneoxide adduct is used as a shrinkage inhibiting agent so as to prevent generation of cracks due to drying shrinkage (Japanese Patent Application Laid-open (kokai) No. 59-227751). However, this method provides neither a satisfactory long pot life, which is a goal of the present invention, nor a sufficient crack prevention effect.

In order to improve the above-described gypsum-type and cement-type self-leveling materials, it has been proposed that gypsum and cement be used in combination, thereby achieving a self-leveling material which shrinks only slightly when dried, and which has excellent waterproofing properties (Japanese Patent Publication (kokoku) No. 5-35100). However, since the gypsums used in this publication are by-product gypsums (anhydrous fluorogypsum (II), etc.) or gypsum hemihydrates, they react rapidly and their expansion is difficult to control during setting. Therefore, they excessively expand under certain environmental conditions, producing cracks or separating from the substrate.

Accordingly, an object of the present invention is to provide a self-leveling aqueous composition which has a long pot life, which provides a surface which is hard enough for work thereon on the day following installation of the composition, which does not produce cracks after setting, which adheres to the substrate surface securely without separating, and which has excellent waterproofing properties.

Disclosure of the Invention:

Under the above circumstances, the inventors of the present invention carried out extensive studies, and as a result, found that a self-leveling aqueous composition which comprises a mixture of cement and natural II-type anhydrous gypsum at a certain weight ratio as a base material and an acrylic dispersant or an acrylic dispersant in combination with a melamine dispersant as a dispersant achieves the above-described object.

That is, when a base material contains natural II-type anhydrous gypsum which sets slowly and expands slightly, it is possible to solve the problems of generation of cracks, separation from the substrate, and shortened pot life caused by high reactivity that have frequently occurred when by-product anhydrous gypsum of type II or gypsum hemihydrate is used. Moreover, a combined use of cement and natural type-II anhydrous gypsum can prevent generation of cracks and separation from the substrate for a long time because a slight amount of expansion caused from setting of natural type-II anhydrous gypsum compensates for the drying shrinkage of cement, thereby minimizing the change in length.

Generally, it is difficult for natural type-II anhydrous gypsum to provide enough strength required for SL materials because it is less reactive than by-product anhydrous gypsum or gypsum hemihydrate. However, the inventors of the present invention discovered that if a mixture, at a certain ratio, of cement and gypsum containing natural II-type anhydrous gypsum as its major parts, is used as a base material, an acrylic dispersant or another dispersant composed of a certain graft copolymer is used singly or in combination with a melamine dispersant, and the mixture, the dispersant, and other materials are used in amounts that satisfy a suitable proportion, it is possible to obtain an SL material of excellent quality which has sufficient strength and which neither generates cracks nor separates from the substrate after setting.

Accordingly, the present invention provides a self-leveling aqueous composition comprising 100 parts by weight of a base material which is a mixture of cement and natural type-II anhydrous gypsum which are mixed at a weight ratio from 40/60 to 80/20; 0.1 to 3 parts by weight of an acrylic dispersant or a dispersant mixture which contains 0.1 to 3 parts by weight of an acrylic dispersant and 0.1 to 2 parts by weight of a melamine dispersant; 0.01 to 0.6 parts by weight of a thickener; 0.01 to 0.6 parts by weight of a defoaming agent; 0.05 to 1 part by weight of a setting accelerator; 0.2 to 6 parts by weight of a shrinkage inhibitor; 30 to 300 parts by weight of an aggregate; and 30 to 60 parts by weight of water.

Best Mode for Carrying Out the Invention:

In the present invention, the waterproofing performance of the base material is enhanced as the amounts of cement increase. The higher the ratio of gypsum is, the less the shrinkage, prolonging the pot life. In the present invention, the ratio by weight of cement to gypsum is from 40/60 to 80/20. If the quantity of cement exceeds this range, shrinkage after drying becomes great, increasing the risk of generating cracks or causing separation of the material from the substrate. On the other hand, if the quantity of gypsum exceeds this range, strength and waterproofing performance deteriorate. Generally, a range from 50/50 to 70/30 is preferred.

Examples of the cement include portland cements such as ordinary cement, high-early-strength cement, ultra high-early-strength cement, moderate heat cement, and sulfate resisting cement; and blended cements such as blast-furnace slag cement, fly ash cement, and silica cement.

As gypsum, natural type-II anhydrous gypsum is used. Natural type-II anhydrous gypsum may be used with not more than 30% by weight thereof being substituted by by-product type-II anhydrous gypsum, or with not more than 20% by weight thereof being substituted by gypsum hemihydrate.

Especially in the case where an acrylic dispersant is used by itself as a dispersant, it is preferred that natural type-II anhydrous gypsum be used together with by-product type-II anhydrous gypsum or gypsum hemihydrate in order to obtain enhanced strength. However, if by-product type-II anhydrous gypsum or gypsum hemihydrate is contained in natural type-II anhydrous gypsum, the resultant mixture sets quickly and exhibits its strength earlier than the case where natural type-II gypsum is used singly, deteriorating the fluidity and the pot life. Therefore, outside of the above-mentioned range is not preferable.

Examples of the acrylic dispersant include the following compounds:

(a) Dispersant S: A water-soluble vinyl copolymer which is obtained by copolymerizing a monomer of the structural unit represented by the following formula (1), a monomer of the structural unit represented by the following formula (2), and a monomer (3) which is capable of being copolymerized with monomer of formula (1) and monomer of formula (2) in a proportion of 40-80/20-60/0-20 mol%:

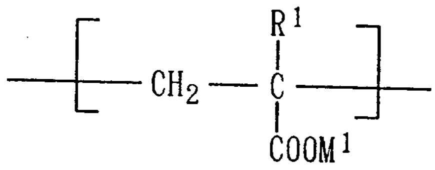

(1)

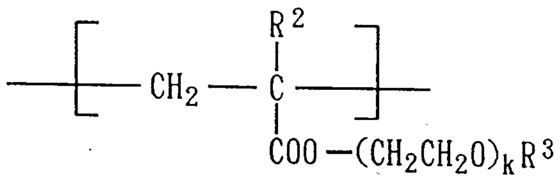

(2)

wherein $R^1$ and $R^2$ are the same or different and each represents H or $CH_3$; $R^3$ is C1-C5 alkyl, $M^1$ is an alkali metal, an alkaline earth metal, or an organic amino group; and k is an integer from 5 to 50.

Examples of the structural unit represented by formula (1) include salts of (meth)acrylic acid and an alkali metal such as sodium, potassium, etc.; salts of (meth)acrylic acid and alkaline earth metals such as calcium; and salts of (meth)acrylic acid and alkanolamines such as diethanolamine, triethanolamine, etc. Examples of the structural unit represented by formula (2) include alkoxy (C1-C5) polyethylene oxide or polypropylene oxide (5 - 50 moles of ethylene oxide have been added) and alkyleneglycol(meth)acrylate. More specifically, methoxypoly(5 to 50 moles of ethylene oxide being added)ethyleneglycol(meth)acrylate may be used. Examples of the structural unit of the monomer which is copolymerizable with monomers of formulas (1) and (2) include sodium (meth)allylsulfonate and methyl(meth)acrylate. The water-soluble vinyl copolymers which are used in the present invention have a number average molecular weight by number from 1,500 to 50,000, and more preferably, from 2,000 to 20,000 (see, for example, Japanese Patent Publication (kokoku) Nos. 59-18,338 and 5-11,057).

(b) Dispersant T: A graft copolymer which is constituted by structural units of the following formulas (3) to (6), wherein the unit represented by formula (3) is from 40 to 80 mol%, the unit represented by formula (4) is from 1 to 30 mol%, the unit represented by formula (5) is from 1 to 20 mol%, and the unit represented by formula (6) is from 5 to 30 mol%.

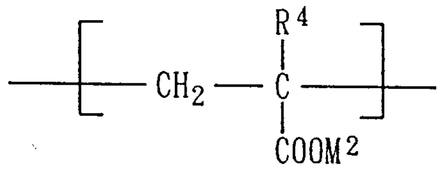

(3)

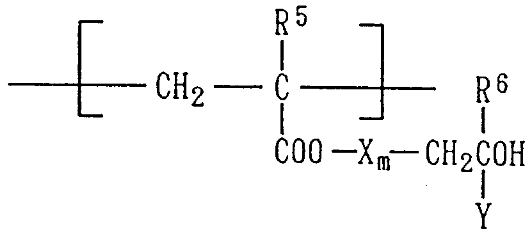

(4)

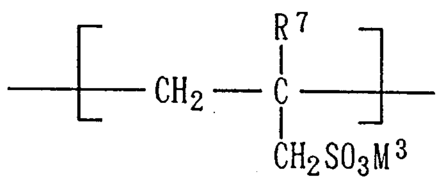

(5)

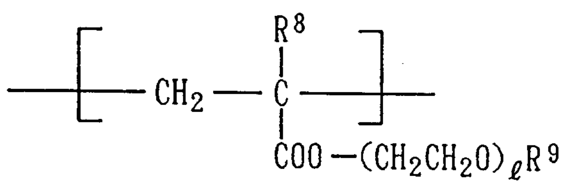

(6)

wherein $R^4$ to $R^8$ are the same or different from each other and each represents H or $CH_3$; $R^9$ is C1-C5 alkyl, $M^2$ and $M^3$ are an alkali metal, an alkaline earth metal, or an organic amino group; X is $CH_2CH_2O$, $CH_2CH(CH_3)O$, or $CH_2$; Y is a polymer block obtained by a radical copolymerization of acrylic amide and a salt of 2-acrylamide-2-methylpropanesulfonic acid; m is an integer from 0 to 10; and $\ell$ is an integer from 0 to 30.

Examples of the structural unit of formula (3) include salts of (meth)acrylic acid and an alkali metal such as sodium, potassium, etc.; salts of (meth)acrylic acid and alkaline earth metals such as calcium; and salts of (meth)acrylic acid and alkanolamines such as diethanolamine, triethanolamine, etc. Examples of the structural unit of formula (4) include a product of 2-hydroxyethyl methacrylate, polyethylene glycol (2 to 10 moles of ethylene oxide have been added) monomethacrylate and a polymer block Y obtained by a radical copolymerization of acrylic amide and a salt of 2-acrylamide-2-methylpropanesulfonic acid. Examples of the structural unit of formula (5) include salts of (meth)allylsulfonic acid and an alkali metal such as sodium, potassium, etc. Examples of the structural unit of formula (6) include methoxypolyethylene glycol methacrylate, methylacrylate, etc.

The method of manufacturing (b) dispersant T, a graft copolymer, is not particularly limited. For example, the monomers other than polymer block Y are subjected to a radical copolymerization in an aqueous system using a radical polymerization reactor such as persulfate to prepare a precursor of a graft copolymer, and subsequently, a salt of acrylic amide and 2-acrylamide-2-methylpropanoic acid for forming a polymer block Y is added to the precursor preferably in a molar ratio from 90/10 to 50/50 to cause a graft polymerization using a ceric salt as a catalyst.

The number average molecular weight of the part of the graft copolymer corresponding to the precursor is preferably from 2,000 to 20,000 (GPC method, converted into pullulan). The graft copolymer resulting from linking of this part and a polymer block Y by graft copolymerization preferably has a reduced concentration (20°) in a range from 0.10 to 0.8 when measured in a 1% solution of 1N NaCl.

(c) Dispersant U: A water-soluble vinyl copolymer obtained by a radical copolymerization of structural units of the following formulas (7) to (11) in the ratio of 45-65/8-23/3-25/5-25/3-15 mol% in an aqueous phase.

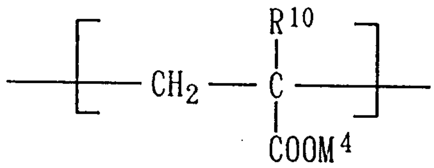

(7)

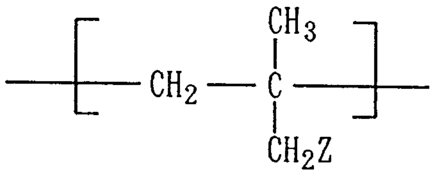

(8)

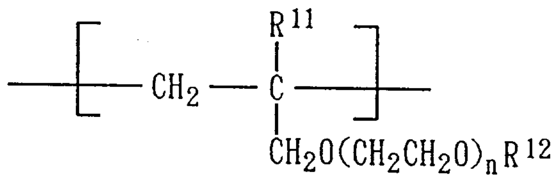

(9)

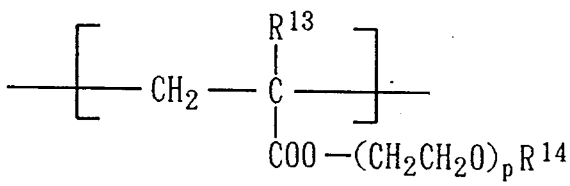

(10)

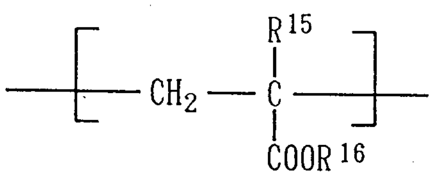

(11)

wherein $R^{10}$, $R^{11}$, $R^{12}$, $R^{13}$, $R^{15}$: H or $CH_3$; $R^{14}$, $R^{16}$: C1-C3 alkyl; X: $-SO_3M^5$ or a group represented by the following formula (12):

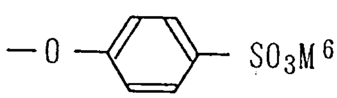

(12),

$M^4$, $M^5$, $M^6$: an alkali metal, an alkaline earth metal, ammonium or an organic amine;
n: an integer from 1 to 30; and
p: an integer from 5 to 50.

Examples of the structural unit of formula (7) include alkali metal salts, alkaline earth metal salts and alkanolamine salts of (meth)acrylic acid.

Examples of the structural unit of formula (8) include 1) alkali metal salts of methallylsulfonate, alkaline earth metal salts of methallylsulfonate, alkanolamine salts of methallylsulfonate, etc., and 2) alkali metal salts of p-methallyloxybenzene sulfonate, alkaline earth metal salts of p-methallyloxybenzene sulfonate, alkanolamine salts of p-methallyloxybenzene sulfonate, etc.

Examples of the structural unit of formula (9) include polyethylene glycol mono(meth)allylether in which 1-30 moles of ethylene oxide have been added and methoxypolyethylene glycol (meth)allylether in which 1-30 moles of ethylene

oxide have been added. Of these, polyethylene glycol mono(meth)allylether in which 5-25 moles of ethylene oxide have been added and methoxypolyethylene glycol (meth)allylether in which 5-25 moles of ethylene oxide have been added are particularly preferred.

Examples of the structural unit of formula (10) include esters of (meth)acrylic acid and monoalkoxy polyethylene glycol such as methoxypolyethylene glycol, ethoxypolyethylene glycol, propoxypolyethylene glycol, isopropoxypolyethylene glycol and the like in which 5 to 50 moles of ethylene oxide have been added.

Examples of the structural unit of formula (11) include (meth)acrylic esters such as methyl(meth)acrylate, ethyl(meth)acrylate, propyl(meth)acrylate, and isopropyl(meth)acrylate.

The proportion of the structural units of formulas (7) to (11) for copolymerization, i.e., (7)/(8)/(9)/(10)/(11) is 45-65/8-23/3-25/5-25/3-15 based on % by mole. If the proportion falls outside this range, the resultant water-soluble vinyl copolymer cannot exhibit the intended effects as a dispersant. It is preferred that the number average molecular weight of the thus obtained water-soluble vinyl copolymer be from 2,000 to 20,000 (by a GPC method, converted into pullulan).

Among the structural units represented by formulas (7) to (11), the monomers of formulas (8) and (9) are important. Particularly, when methallylsulfonate and p-methallyloxybenzene sulfonate are used in combination as monomers (8), the resultant water-soluble vinyl copolymers give a stable, high fluidity to SL materials incorporating the copolymers without being affected by the variation of temperature.

The above water-soluble vinyl copolymers identified as (c), i.e., dispersant U can be obtained by a radical copolymerization in which the monomers corresponding to the above-described structural units are used in a predetermined ratio for copolymerization. It is important that the copolymerization be carried out by an aqueous solution polymerization using water or a solvent mixture of water and a water-soluble organic solvent. In detail, monomers are dissolved in water to prepare an aqueous solution containing 10 to 45% in total of the monomers. Next, a radical polymerization initiator is added to the aqueous solution in an atmosphere of nitrogen, and radical copolymerization is allowed to proceed at 50 to 70°C for 5 to 8 hours to obtain a water-soluble vinyl copolymer. The radical polymerization initiator is not particularly limited as long as it is consumed in the reaction at a temperature at which copolymerization reaction proceeds while releasing radicals. Especially, water-soluble radical polymerization initiators are preferred. Examples of the water-soluble radical polymerization initiators include persulfates such as potassium persulfate and ammonium persulfate, hydrogen peroxide, and 2,2-azobis(2-amidinopropane) • 2HCl. They may be combined with a reducing substance such as sulfites and L-ascorbic acid, or amines, etc., and may be used as redox polymerization initiators.

With regard to the melamine dispersant, those which contain, as a primary component, a highly condensated product of melaminesulfonic acid and formalin are preferably used.

These dispersants are used for the purposes of obtaining highs fluidity and a pot life of 6 hours or more. It is noteworthy that increased amounts of acrylic dispersants prolong the pot life because they have significant delaying effects, and increased amounts of melamine dispersants enhance the fluidity because they have high dispersing ability though their delaying effects are small. If the amounts of the acrylic dispersants to be added are not more than 0.1 part by weight, no effects are expected. By contrast, addition of the acrylic dispersants in not less than 3 parts by weight causes delay in setting or deteriorated strength. Accordingly, it is preferred that the amounts of acrylic dispersants be generally from 0.1 to 3 parts by weight, and particularly preferably from 0.4 to 1.2 parts by weight. On the other hand, when the amounts of the melamine dispersants to be added are not more than 0.1 part by weight, no effects are expected, and when the amounts are not less than 2 parts by weight, deteriorated strength or separation of the material from the substrate occurs. Accordingly, it is preferred that the amounts of melamine dispersants be generally from 0.1 to 2 parts by weight, and particularly preferably from 0.2 to 1.0 parts by weight.

In the present invention, when the gypsum is natural type-II anhydrous gypsum alone, delay in setting accompanied by deteriorated strength might be incurred if the acrylic dispersants are used alone (especially in the case where dispersants S or T are used). To prevent this, a combined use with melamine dispersants which do not inhibit hydration of gypsum and which have weak effects of delaying setting is recommended.

If the gypsum contains by-product type-II anhydrous gypsum or gypsum hemihydrate, both a single use of acrylic dispersants and a combined use of acrylic dispersants and melamine dispersants may work because gypsum sets relatively quickly and exhibits high strength.

When either dispersant S or dispersant T is used as an acrylic dispersant, it cannot exhibit effects if used not more than 0.1 parts by weight. If the amounts are not less than 3 parts by weight, delay in setting or deterioration in strength is caused. Accordingly, it is preferred that their amounts be from 0.1 to 3 parts by weight. In general cases, a range from 0.4 to 1.2 parts by weight is preferred.

When dispersants U are used in amounts falling in the above-mentioned ranges, they exhibit a delaying effect necessary to secure the pot life. They never inhibit the subsequent hydration reaction of gypsum or cement, and therefore, they follow an excellent course of exhibiting strength. Moreover, since temperature changes affect the dispersion performance only slightly, good and stable fluidity can be obtained in any environmental situations. Addition of dispersant U is not effective in amounts not more than 0.1 parts by weight, whereas addition in amounts not less than 3 parts by weight cause delay in setting or deterioration in strength. Accordingly, it is preferred that their amounts be from 0.1 to 3 parts by weight. In general cases, a range from 0.4 to 1.2 parts by weight is preferred.

Examples of thickeners include methylcellulose, hydroxyethylcellulose, and carboxymethylcellulose. Addition of a thickener is effective for preventing the separation of the material. Moreover, moisture holding ability of thickeners improve the resistance against drying shrinkage. Amounts not more than 0.01 parts by weight do not produce any effects, whereas amounts not less than 0.6 parts by weight deteriorate the fluidity and mar the self-leveling performance.

Accordingly, they are generally used in amounts from 0.01 to 0.6 parts by weight. It is particularly preferred that the amounts be in a range from 0.05 to 0.4 parts by weight.

The defoaming agents prevent swelling Or depression of the floor surface caused by air bubbles. The defoaming agents used in the present invention are known defoaming agents such as silicone surfactants, nonionic surfactants, etc. They are used in amounts from 0.01 to 0.6 parts by weight. Use in excessive amounts is not economical since it does no more improve the effects. Use in a range of 0.05 to 0.4 parts by weight is particularly preferred.

The setting accelerators accelerate hydration of gypsum, and include sulfuric acid salts of alkali metals or alkaline earth metals, with potassium sulfate being particularly preferred. Use in amounts not more than 0.05 parts by weight cannot exhibit any effects, whereas use in not less than 1 part by weight may cause deteriorated fluidity and shortened pot life. Therefore, they are generally used in amounts from 0.05 to 1 part by weight. Use in a range of 0.01 to 0.6 parts by weight is particularly preferred.

The shrinkage inhibitors reduce the drying shrinkage and enhance the resistance against crack generation especially at high temperatures under drying conditions. The shrinkage inhibitors used in the present invention may be known ones including polyalkylene glycols such as poly(2-12 mol)propylene glycol and poly(2-12 mol)propylenepoly(2-6 mol)ethylene glycol; and C1-C6 alkoxypoly(2-12 mol)propylenepoly(2-6 mol)ethylene glycol. The shrinkage inhibitors in amounts not more than 0.2 parts by weight cannot exhibit their effect, whereas amounts not less than 6 parts by weight may cause deterioration in strength. Thus, they are used in amounts of 0.2 to 6 parts by weight. Under ordinary conditions, use in the range from 0.5 to 2 parts by weight is preferred. If environments of high temperatures are expected, it is preferred that the amounts be increased up to 6 parts by weight.

The aggregates used in the present invention are river sand, sea sand, land sand, crushed sand, silica sand, etc. They are preferably used as dry sands, but wet sands can also be used without any hindrance. Moreover, fly ash, blast-furnace slag, potassium carbonate may be used singly or in combination with these sands. The aggregates preferably have a grain size of not more than 5 mm and an F.M. ranging from 1.5 to 3.0. The amounts are from 30 to 300 parts by weight. Amounts of 30 parts by weight or less increase the magnitude of shrinkage, and amounts of 300 parts by weight or more cause deterioration in strength and fluidity, thus both are not preferable. It is particularly preferred that the amounts of aggregates be from 60 to 120 parts by weight.

Water is added in such amounts that are adapted to the flow value described in JASS15M-103 "Quality Standards for Self-leveling Materials" by Architectural Institute of Japan (the value: 19 cm). Generally, the amounts are from 30 to 60 parts by weight.

The self-leveling aqueous compositions according to the present invention may contain extenders, additives, etc. in addition to the essential components as described hereinbefore as long as they do not adversely affect the properties of the present compositions.

Examples:

The present invention will be described by way of examples, which should not be construed as limiting the invention.

The materials used in the Examples are listed below.

Substrates:

| Ordinary portland cement (by Onoda Cement Co.) | |
|---|---|
| Natural type-II anhydrous gypsum (product of Thailand): | 3,900 $cm^2/g$ |
| By-product type-II anhydrous gypsum (manufactured by Central Glass Co., fluorogypsum): | 5,000 $cm^2/g$ |
| $\alpha$-Hemihydrate gypsum (manufactured by Onoda Cement Co.) | 3,500 $cm^2/g$ |

Expanding Agent:

An expanding agent based on lime, Expan (Manufactured by Onoda Cement Co.)

Dispersants:

S1: A water-soluble vinyl copolymer with a structural unit of sodium methacrylate/sodium methallylsulfonate/methoxypoly(n=23)ethyleneglycol methacrylate = 55/15/30 (mol%) (molecular weight: 6,000)
S2: A water-soluble vinyl copolymer with a structural unit of sodium methacrylate/methoxypoly(n=9)ethyleneglycol methacrylate = 60/40 (mol%) (molecular weight: 4,000)
T1 to T5: see Table 1
U1 to U4 and V1 to V5: see Table 2
M: Highly condensated salt of melamine sulfonic acid - formalin

Setting Accelerator: Potassium sulfate
Shrinkage Inhibitor: Poly(7 mol)propylene glycol, Hibidan (Takemoto Yushi Kabushiki Kaisha)
Thickening Agent: M Methylcellulose, SEB-04T (manufactured by Shin'etsu Kagaku)

Defoaming Agent:

Alcohol-base nonionic surfactant, SN-Defoamer 14HP (manufactured by Sannopco Co.)
Aggregate: Silica sand (product of Yamagata prefecture, F.M.=2.3)

Table 1

| Kinds of graft copolymer | Compositions of copolymer before graft polymerization (mol%) | | | | | | Molecular weight of the copolymer before graft polymerization | Compositions of polymer block Y after graft polymerization (mol%) | | Ratio (Weight ratio) | *1 |
|---|---|---|---|---|---|---|---|---|---|---|---|
| | Unit A | Unit B | | Unit C | Unit D | | | | | | |
| | (a) | (b-1) | (b-2) | (c) | (d-1) | (d-2) | | (e) | (f) | | |
| T1 | 53 | 15 | | 14 | 18 | | 5000 | 92 | 8 | 21/100 | 0.27 |
| T2 | 53 | 15 | | 14 | 18 | | 5000 | 75 | 25 | 7/100 | 0.21 |
| T3 | 53 | 15 | | 14 | 18 | | 5000 | 40 | 60 | 80/100 | 0.30 |
| T4 | 60 | | 7 | 13 | 20 | | 4000 | 90 | 10 | 10/100 | 0.18 |
| T5 | 60 | 10 | | 10 | | 20 | 7000 | 80 | 20 | 50/100 | 0.43 |

Unit A is a structural unit shown by formula (3).
Unit B is a structural unit shown by formula (4).
Unit C is a structural unit shown by formula (5).
Unit D is a structural unit shown by formula (6).

a : sodium methacrylate
b-1: 2-hydroxyethyl methacrylate
b-2: polyethyleneglycol(n=9)monomethacrylate
c : sodium methallylsulfonate
d-1: methoxypoly(n=23)ethyleneglycol methacrylate
d-2: methoxypoly(n=9)ethyleneglycol monomethacrylate
e : acrylamide
f : sodium 2-acrylamide-2-methylpropane sulfonate
Ratio: polymer block Y after graft polymerization/copolymer before graft polymerization (ratio by weight)
*1: reduced viscosity of 1% graft copolymer in a solvent of aqueous 1N NaCl solution (20°C).

Table 2

| Mixing conditions of dispersing agents used | | | | | | | | | | | |
|---|---|---|---|---|---|---|---|---|---|---|---|
| Kinds | Monomers and their copolymerization ratio (mol%) | | | | | | | | | | Molecular weight |
| | Monomer a | | Monomer b | | Monomer c | | Monomer d | | | Monomer e | |
| | a-1 | a-2 | b-1 | b-2 | c-1 | c-2 | d-1 | d-2 | d-3 | e-1 | |
| U1 | | 56 | 10 | 3.5 | 9 | | 10.5 | | | 11 | 3600 |
| U2 | | 59 | 11 | 5 | 10 | | | | 6 | 9 | 6800 |
| U3 | | 50 | 10 | | | 15 | | 20 | | 5 | 8600 |
| U4 | 61 | | 9 | 3 | | 10 | 11 | | | 6 | 12000 |
| V1 | | 60 | | | | | | 40 | | | 5000 |
| V2 | | 55 | 15 | | | | 30 | | | | 6000 |
| V3 | | 63 | 8 | | | | | 19 | | 10 | 7300 |
| V4 | | 60 | | | 20 | | 10 | | | 10 | 10000 |
| V5 | 35 | | | 20 | | | | | 8 | 20 | 25000 |

Note)
In Table 2, monomers a to e are those which correspond to the structural units having the formulas (7) to (11) described hereinbefore.
a-1: Sodium acrylate,
a-2: Sodium methacrylate,
b-1: Sodium methallylsulfonate
b-2: Sodium p-methallyloxybenzenesulfonate
c-1: Polyethyleneglycol(n=8)monoallylether
c-2: Polyethyleneglycol(n=4)monoallylether
d-1: Methoxypolyethyleneglycol(n=23)methacrylate
d-2: Methoxypolyethyleneglycol(n=9)methacrylate
d-3: Methoxypolyethyleneglycol(n=40)methacrylate
e-1: Methylacrylate

Method of preparing graft copolymers (T1 to T5):

Methacrylic acid (66 parts by weight, hereinafter the same applies), 2-hydroxyethylmethacrylate (28.5 parts), sodium methallylsulfonate (31 parts), methoxypolyethyleneglycol(number of mols of ethylene oxide added (n) = 23)monomethacrylate (273 parts), and water (500 parts) were charged in a flask equipped with a stirrer. 64 parts of 48% (% by weight, hereinafter the same applies) aqueous solution of NaOH were added to the flask for neutralizing the mixture, and the mixture was dissolved to obtain a uniform solution. Subsequently, the atmosphere was replaced with nitrogen gas. The temperature of the reaction system was maintained at 55°C in a hot bath, and 12 parts of ceric nitrate in ammonium (1/10 mol of cerium ions in 1N nitric acid) were added to complete a graft polymerization reaction. The resultant product was condensed with an evaporator, purified by allowing it to precipitate from a mixture solvent of acetone/ethyl acetate, and dried. As a result, a graft copolymer (T1) was obtained. Analysis of the graft copolymer (T1) revealed the following: carboxyl value: 85, content of nitrogen: 2.9%, content of sulfur: 1.7%, reduced viscosity (1% concentration, 20°C, in 1N NaCl solution): 0.27. Thermal decomposition gas chromatography and NMR revealed that the graft copolymer (T1) is a copolymer in which a copolymer before undergoing graft polymerization of sodium methacrylate/2-hydroxyethylmethacrylate/sodium methallylsulfonate/methoxypoly(n=23)ethyleneglycol methacrylate (53/15/14/18 by molar ratio) is linked with a polymer block of a copolymer of polyacrylamide/sodium 2-acrylamide-2-methylpropanesulfonate (92/8 by molar ratio), and that the proportion of the "polymer block"/"copolymer before undergoing graft polymerization", both having the above component ratios, is 21/100 (on a weight basis).

In a similar manner, the graft copolymers (T2) to (T5) listed in Table 1 were obtained.

Method of preparing water-soluble vinyl copolymers (U1 to U4):

Methacrylic acid (54 parts, 0.628 mol), sodium methallylsulfonate (18 parts, 0.114 mol), sodium p-methallyloxybenzenesulfonate (10 parts, 0.04 mol), polyethyleneglycol(n=8, n is the number of mols of ethylene oxide added, the same applies hereinafter)monoallylether (40 parts, 0.098 mol), methoxypolyethyleneglycol(n=23)methacrylate (128 parts, 0.120 mol), methylacrylate (11 parts, 0.128 mol) and ion-exchange water (260 parts) were charged in a flask, and the mixture was dissolved with stirring. Subsequently, 84 parts of aqueous 30% NaOH solution were added for neutralizing the mixture, and the pH of the reaction system was adjusted to 8.5. While maintaining the temperature of the reaction system at 60°C in a hot bath, the atmosphere of the reaction system was replaced with nitrogen. 30 parts of 20% aqueous ammonium persulfate were added as a polymerization initiator to carry out a polymerization. After polymerization continued for 4 hours, 15 parts of 20% aqueous ammonium persulfate were further added and reaction was continued for 3 hours more before the completion of polymerization.

In order to neutralize acidic decomposition products, 3 parts of 30% NaOH were added, thereby completely neutralizing the system and yielding a product. Unreacted monomers contained in the thus obtained product was removed by condensing the product with an evaporator, allowing to precipitate in petroleum ether, and filtering off. Subsequently, the filtrate was dried in vacuo to obtain 275 parts of a purified water-soluble vinyl copolymer (U1). Analysis of the water-soluble vinyl copolymer (U1) revealed the following: carboxyl value: 128, content of sulfur: 1.74%, content of $Na_2O$: 8.8%, and content of sodium p-methallyloxybenzenesulfonate: 3.5%. NMR analysis revealed that the copolymer has a proportion of the components, sodium methacrylate/sodium metallylsulfonate/sodium p-methallyloxybenzenesulfonate/polyethylene glycol(n=8)monoallylether/methoxypolyethylene glycol(n=23) methacrylate/methylacrylate of 56/10/3.5/9/10.5/11 (molar ratio), and that the number average molecular weight is 3,600 (converted into GPC pullulan, the same applied hereinafter).

In a similar manner, water-soluble vinyl copolymers U2 to U4 and V1 to V5 listed in Table 2 were prepared.

Examples 1 to 30 and Comparative Examples 1 to 26:

All the components in Tables 3, 4 and 5 at proportions indicated in the Tables were mixed with a HOBART mixer for 3 minutes at 5°C, 10°C, 20°C, or 30°C until a uniform mixture is obtained, to prepare a self-leveling material. The following quality tests were carried out on the obtained self-leveling material. The results are shown in Tables 6 to 15.

(1) Flow value:

The flow value was measured according to JASS15M-103 "Quality Standards for Self-leveling Materials" by Architectural Institute of Japan.

(2) Changes over time of flow value:

A self-leveling material prepared as described above was held in a stationary state, and 3 hours and 6 hours thereafter, the material was kneaded with a spatula for about 1 minute. Subsequently, in a manner similar to that for the flow value, an average value was obtained.

(3) J-funnel value:

J-funnel value was measured according to the constancy testing method No. 17 proposed by Japan Society of Civil Engineers based on the Handbook of Industrial Material Standards (The Society of Materials Science, Japan). The inner diameter of the straight section of the J-funnel used was 10 mm.

(4) Changes over time of J-funnel value:

A self-leveling material prepared as described above was held in a stationary state, and 3 hours and 6 hours thereafter, the material was kneaded with a spatula for about 1 minute. Subsequently, in a manner similar to that for the J-funnel value, an average value was obtained.

(5) Rate of change in length:

The rate of change in length was measured according to the method for measuring changes in length of mortars and concretes (JIS-A-1129). The environmental temperatures and humidities at which the test was performed were 10, 20, and 30°C for the temperature, and 60%, 90%, and in water for the humidity.

(6) Setting time:

The setting time was measured according to the physical testing method for cements (JIS-R-5201).

(7) Compression strength:

In a similar manner as the physical testing method for cements (JIS-R-5201), the strength was measured on day 7 and day 28 of curing. Curing was carried out in air (20°C, 60% R.H.).

(8) Surface strength:

In a similar manner as defined in JASS15M-103 "Quality Standards for Self-leveling Materials", the surface strength was measured on day 14 and day 28 of curing using a bound strength tester of a model proposed by The Building Research Institute, Ministry of Construction, Japanese Government.

(9) Waterproofing performance:

The self-leveling material was cured in water for 28 days. Thereafter, the compression strength was measured in a manner similar to the above. Assuming that the compression strength of the same self-leveling material after cured in air for 28 days is 100%, the ratio of the compression strength after cured in water was obtained as follows:

$$\frac{\text{Compression strength when cured in water}}{\text{Compression strength when cured in air}} \times 100\ (\%)$$

(10) Cracks and separation:

The self-leveling material was poured on a concrete floor so as to have thicknesses of 10 and 40 mm, and a size of 150 cm x 150 cm, and cured for 28 days. Presence or absence of cracks and separation were checked.

Table 3

(unit: parts by weight)

| Mixing conditions | Base materials | | | | Expander | Dispersing agent | | Accelerating agent | Shrinkage inhibiter | Thickening agent | Defoaming agent | Aggregate | Water |
|---|---|---|---|---|---|---|---|---|---|---|---|---|---|
| | Cement | Gypsum | | | | | | | | | | | |
| | Ordinary cement | G1 | G2 | G3 | Expan | Acryl-base dispersing agent | Melamine-base dispersing agent | Potassium sulfate | Hibidan | SEB-04T | SN-defoamer | Silica sand | |
| M-1 | 40 | 60 | 0 | 0 | 0 | *1 | *2 | 0.4 | 1.0 | 0.2 | 0.2 | 100 | 45 |
| M-2 | 60 | 40 | 0 | 0 | 0 | *1 | *2 | 0.4 | 1.0 | 0.2 | 0.2 | 100 | 47 |
| M-3 | 80 | 20 | 0 | 0 | 0 | *1 | *2 | 0.4 | 1.0 | 0.2 | 0.2 | 100 | 48 |
| M-4 | 60 | 38 | 2 | 0 | 0 | *1 | *2 | 0.4 | 1.0 | 0.2 | 0.2 | 100 | 50 |
| M-5 | 60 | 28 | 12 | 0 | 0 | *1 | *2 | 0.4 | 1.0 | 0.2 | 0.2 | 100 | 50 |
| M-6 | 60 | 38 | 0 | 2 | 0 | *1 | *2 | 0.4 | 1.0 | 0.2 | 0.2 | 100 | 51 |
| M-7 | 60 | 32 | 0 | 8 | 0 | *1 | *2 | 0.4 | 1.0 | 0.2 | 0.2 | 100 | 53 |
| M-8 | 0 | 100 | 0 | 0 | 0 | *1 | *2 | 0.4 | 1.0 | 0.2 | 0.2 | 100 | 42 |
| M-9 | 0 | 70 | 30 | 0 | 0 | *1 | *2 | 0.4 | 1.0 | 0.2 | 0.2 | 100 | 42 |
| M-10 | 20 | 80 | 0 | 0 | 0 | *1 | *2 | 0.4 | 1.0 | 0.2 | 0.2 | 100 | 45 |
| M-11 | 60 | 24 | 16 | 0 | 0 | *1 | *2 | 0.4 | 1.0 | 0.2 | 0.2 | 100 | 50 |
| M-12 | 60 | 28 | 0 | 12 | 0 | *1 | *2 | 0.4 | 1.0 | 0.2 | 0.2 | 100 | 53 |
| M-13 | 100 | 0 | 0 | 0 | 0 | *1 | *2 | 0 | 1.0 | 0.2 | 0.2 | 100 | 48 |
| M-14 | 100 | 0 | 0 | 0 | 2 | *1 | *2 | 0 | 1.0 | 0.2 | 0.2 | 100 | 46 |
| M-15 | 100 | 0 | 0 | 0 | 5 | *1 | *2 | 0 | 1.0 | 0.2 | 0.2 | 100 | 46 |
| M-16 | 60 | 0 | 40 | 0 | 0 | *1 | *2 | 0.4 | 1.0 | 0.2 | 0.2 | 100 | 47 |
| M-17 | 60 | 0 | 0 | 40 | 0 | *1 | *2 | 0.4 | 1.0 | 0.2 | 0.2 | 100 | 53 |
| M-18 | 0 | 0 | 100 | 0 | 0 | *1 | *2 | 0.4 | 1.0 | 0.2 | 0.2 | 100 | 44 |
| M-19 | 0 | 0 | 0 | 100 | 0 | *1 | *2 | 0.4 | 1.0 | 0.2 | 0.2 | 100 | 56 |

G1: Natural gypsum G2: By-product gypsum G3: Hemihydrate gypsum

*1: Kinds and amounts of acryl-base dispersing agents are shown in Table 4.

*2: Kinds and amounts of melamine-base dispersing agents are shown in Table 4.

Table 4

| Examples | Mixing conditions | Acryl-type dispersing agent | | Melamine-type dispersing agent | |
|---|---|---|---|---|---|
| | | Kinds | Mixing amounts | Kinds | Mixing amounts |
| 1 | M-1 | S1 | 0.4 | M | 0.6 |
| 2 | M-2 | S1 | 0.6 | M | 0.6 |
| 3 | M-3 | S1 | 0.8 | M | 0.6 |
| 4 | M-4 | S1 | 0.6 | M | 0.4 |
| 5 | M-5 | S1 | 0.8 | M | 0.6 |
| 6 | M-6 | S1 | 0.6 | M | 0.4 |
| 7 | M-7 | S1 | 0.8 | M | 0.6 |
| 8 | M-4 | S1 | 1.2 | | |
| 9 | M-5 | S1 | 1.6 | | |
| 10 | M-6 | S1 | 1.2 | | |
| 11 | M-7 | S1 | 1.6 | | |
| 12 | M-2 | S2 | 0.6 | M | 0.6 |
| 13 | M-2 | T1 | 0.6 | M | 0.6 |
| 14 | M-2 | T2 | 0.6 | M | 0.6 |
| 15 | M-2 | T3 | 0.6 | M | 0.6 |
| 16 | M-2 | T4 | 0.6 | M | 0.6 |
| 17 | M-2 | T5 | 0.9 | M | 0.6 |
| 18 | M-5 | T1 | 0.8 | M | 0.6 |
| 19 | M-7 | T1 | 0.8 | M | 0.6 |
| 20 | M-7 | T1 | 1.6 | | |
| Comparative Examples | | | | | |
| 1 | M-1 | S1 | 1.2 | | |
| 2 | M-2 | S1 | 1.4 | | |
| 3 | M-3 | S1 | 1.6 | | |
| 4 | M-8 | | | M | 0.6 |
| 5 | M-9 | | | M | 1.0 |
| 6 | M-10 | S1 | 0.4 | M | 0.6 |
| 7 | M-11 | S1 | 1.6 | | |
| 8 | M-12 | S1 | 1.6 | | |
| 9 | M-11 | S1 | 0.8 | M | 0.6 |
| 10 | M-12 | S1 | 0.8 | M | 0.6 |
| 11 | M-13 | S1 | 1.6 | | |
| 12 | M-14 | S1 | 1.6 | | |
| 13 | M-15 | S1 | 1.6 | | |
| 14 | M-16 | S1 | 0.6 | M | 0.6 |
| 15 | M-17 | S1 | 0.6 | M | 0.6 |
| 16 | M-18 | S1 | 0.6 | M | 0.6 |
| 17 | M-19 | S1 | 0.6 | M | 0.6 |

Table 5

Mixing conditions (unit: parts by weight)

| | Base materials | | Dispersing agent | | Accelerating agent | Shrinkage inhibiter | Thickening agent | Defoaming agent | Aggregate | Water |
|---|---|---|---|---|---|---|---|---|---|---|
| | Cement | Gypsum | | | | | | | | |
| | Ordinary cement | Natural Gypsum | Acryl-base dispersing agent | | Potassium sulfate | Hibidan | SEB-04T | SN-defoamer | Silica sand | |
| | | | Kinds | Amounts added | | | | | | |
| **Examples** | | | | | | | | | | |
| 21 | 40 | 60 | U1 | 0.8 | 0.4 | 1.0 | 0.2 | 0.2 | 100 | 45 |
| 22 | 60 | 40 | U1 | 1.0 | 0.4 | 1.0 | 0.2 | 0.2 | 100 | 47 |
| 23 | 60 | 40 | U2 | 1.0 | 0.4 | 1.0 | 0.2 | 0.2 | 100 | 47 |
| 24 | 60 | 40 | U3 | 1.0 | 0.4 | 1.0 | 0.2 | 0.2 | 100 | 47 |
| 25 | 60 | 40 | U4 | 1.0 | 0.4 | 1.0 | 0.2 | 0.2 | 100 | 47 |
| 26 | 80 | 20 | U1 | 1.2 | 0.4 | 1.0 | 0.2 | 0.2 | 100 | 48 |
| 27 | 60 | 40 | U1 | 1.4 | 0.4 | 1.0 | 0.16 | 0.2 | 100 | 46 |
| 28 | 60 | 40 | U1 | 1.2 | 0.4 | 1.0 | 0.24 | 0.2 | 100 | 48 |
| 29 | 80 | 20 | U1 | 1.6 | 0.4 | 1.0 | 0.16 | 0.2 | 100 | 46 |
| 30 | 80 | 20 | U1 | 1.4 | 0.4 | 1.0 | 0.24 | 0.2 | 100 | 48 |
| **Comparative Examples** | | | | | | | | | | |
| 18 | 40 | 60 | V1 | 1.2 | 0.4 | 1.0 | 0.2 | 0.2 | 100 | 45 |
| 19 | 60 | 40 | V1 | 1.4 | 0.4 | 1.0 | 0.2 | 0.2 | 100 | 47 |
| 20 | 60 | 40 | V2 | 1.4 | 0.4 | 1.0 | 0.2 | 0.2 | 100 | 47 |
| 21 | 60 | 40 | V3 | 1.5 | 0.4 | 1.0 | 0.2 | 0.2 | 100 | 47 |
| 22 | 60 | 40 | V4 | 1.6 | 0.4 | 1.0 | 0.2 | 0.2 | 100 | 47 |
| 23 | 60 | 40 | V5 | 2.0 | 0.4 | 1.0 | 0.2 | 0.2 | 100 | 48 |
| 24 | 80 | 20 | V1 | 1.8 | 0.4 | 1.0 | 0.2 | 0.2 | 100 | 49 |
| 25 | 100 | 0 | U1 | 1.8 | 0.4 | 1.0 | 0.2 | 0.2 | 100 | 48 |
| 26 | 20 | 80 | U2 | 0.8 | 0.4 | 1.0 | 0.2 | 0.2 | 100 | 46 |

Table 6

Results of tests on flow value and J-funnel value (20°C)

| | Immediately after kneading | | 3 hours later | | 6 hours later | | Evaluation*1 |
|---|---|---|---|---|---|---|---|
| | Flow value (mm) | J-funnel value (sec.) | Flow value (mm) | J-funnel value (sec.) | Flow value (mm) | J-funnel value (sec.) | |
| Examples | | | | | | | |
| 1 | 223 | 22.6 | 225 | 24.3 | 220 | 28.5 | 0 |
| 2 | 226 | 21.2 | 218 | 29.7 | 211 | 35.6 | 0 |
| 3 | 222 | 24.5 | 213 | 34.7 | 204 | 42.2 | 0 |
| 4 | 226 | 21.1 | 220 | 31.6 | 205 | 38.8 | 0 |
| 5 | 223 | 23.1 | 217 | 33.4 | 201 | 43.2 | 0 |
| 6 | 225 | 22.0 | 214 | 31.8 | 202 | 42.2 | 0 |
| 7 | 220 | 25.3 | 211 | 34.6 | 200 | 43.3 | 0 |
| 8 | 224 | 23.3 | 223 | 26.6 | 218 | 29.4 | 0 |
| 9 | 220 | 26.3 | 214 | 34.6 | 206 | 39.0 | 0 |
| 10 | 223 | 23.9 | 215 | 31.0 | 208 | 41.6 | 0 |
| 11 | 217 | 28.8 | 209 | 37.2 | 201 | 43.2 | 0 |
| 12 | 227 | 22.4 | 223 | 28.3 | 217 | 32.2 | 0 |
| 13 | 226 | 23.2 | 224 | 26.8 | 220 | 29.3 | 0 |
| 14 | 224 | 24.8 | 221 | 27.1 | 218 | 30.2 | 0 |
| 15 | 224 | 24.6 | 222 | 28.6 | 215 | 32.4 | 0 |
| 16 | 226 | 22.7 | 227 | 24.1 | 220 | 28.6 | 0 |
| 17 | 223 | 24.3 | 221 | 27.8 | 216 | 33.1 | 0 |
| 18 | 225 | 23.4 | 221 | 27.2 | 211 | 39.1 | 0 |
| 19 | 226 | 24.2 | 223 | 26.0 | 210 | 40.4 | 0 |
| 20 | 224 | 24.5 | 220 | 27.5 | 212 | 41.6 | 0 |
| Comparative Examples | | | | | | | |
| 1 | 221 | 24.3 | 224 | 26.6 | 222 | 27.3 | 0 |
| 2 | 224 | 23.0 | 226 | 25.1 | 220 | 26.8 | 0 |
| 3 | 220 | 25.0 | 222 | 27.2 | 218 | 29.9 | 0 |
| 4 | 220 | 24.8 | 225 | 25.1 | 226 | 26.0 | 0 |
| 5 | 222 | 23.7 | 72 | 178 | NA | NA | X |
| 6 | 223 | 22.8 | 224 | 24.3 | 221 | 27.2 | 0 |
| 7 | 218 | 29.0 | 212 | 48.1 | 188 | 59.8 | X |
| 8 | 216 | 32.0 | 207 | 51.2 | 178 | 77.1 | X |
| 9 | 222 | 23.3 | 206 | 39.8 | 170 | 61.6 | X |
| 10 | 221 | 25.2 | 198 | 43.6 | NA | NA | X |
| 11 | 224 | 21.5 | 219 | 33.4 | 212 | 42.3 | 0 |
| 12 | 222 | 22.6 | 218 | 34.2 | 209 | 44.5 | 0 |
| 13 | 221 | 24.0 | 216 | 36.6 | 210 | 47.8 | 0 |
| 14 | 223 | 23.2 | 163 | 52.6 | NA | NA | X |
| 15 | 221 | 26.8 | 133 | 84.3 | NA | NA | X |
| 16 | 220 | 27.6 | NA | NA | NA | NA | X |
| 17 | 218 | 28.2 | NA | NA | NA | NA | X |

*1: Evaluation of flow values and J-funnel values was carried out by giving rating "0" when the flow value was not less than 190 mm and the J-funnel value was not greater than 50 seconds after 6 hours has elapsed, and rating "X" for others.

Table 7

Results of test on variation in length (Unit: x $10^{-4}$)

| | 10° C | | 20° C | | 30° C | | Evaluation*1 |
|---|---|---|---|---|---|---|---|
| | 60%H.R. | 90%H.R. | 60%H.R. | 90%H.R. | 60%H.R. | 90%H.R. | |
| **Examples** | | | | | | | |
| 1 | -0.32 | 5.69 | -2.65 | 6.33 | -3.94 | 3.22 | O |
| 2 | -1.68 | 4.33 | -3.87 | 4.05 | -5.11 | 2.46 | O |
| 3 | -2.23 | 4.16 | -4.98 | 2.48 | -5.87 | 1.98 | O |
| 4 | 0.11 | 5.74 | -1.32 | 6.56 | -3.32 | 3.14 | O |
| 5 | 3.77 | 7.12 | 0.96 | 7.45 | -2.78 | 4.46 | O |
| 6 | -0.48 | 5.42 | -1.68 | 6.69 | -3.23 | 3.36 | O |
| 7 | 1.20 | 6.06 | 0.55 | 6.78 | -2.80 | 4.88 | O |
| 8 | -0.35 | 5.11 | -2.06 | 5.84 | -4.25 | 2.10 | O |
| 9 | 3.15 | 6.74 | 0.25 | 7.00 | -3.02 | 4.11 | O |
| 10 | -1.12 | 4.89 | -2.23 | 5.48 | -4.46 | 2.74 | O |
| 11 | 1.47 | 5.24 | -0.96 | 6.03 | -3.41 | 3.96 | O |
| 12 | -1.74 | 5.18 | -3.96 | 4.46 | -5.63 | 2.74 | O |
| 13 | -1.21 | 3.46 | -3.03 | 3.73 | -4.13 | 2.68 | O |
| 14 | -1.62 | 4.02 | -3.44 | 4.12 | -4.67 | 2.41 | O |
| 15 | -1.81 | 4.22 | -3.70 | 4.43 | -4.95 | 2.71 | O |
| 16 | -1.71 | 3.98 | -3.50 | 4.22 | -4.33 | 2.81 | O |
| 17 | -1.91 | 4.32 | -3.68 | 4.50 | -4.64 | 2.96 | O |
| 18 | 2.72 | 6.62 | -0.23 | 7.88 | -2.44 | 4.23 | O |
| 19 | 1.33 | 5.12 | -0.85 | 6.56 | -2.20 | 4.02 | O |
| 20 | 1.86 | 5.66 | -0.92 | 6.98 | -2.45 | 3.86 | O |
| **Comparative Examples** | | | | | | | |
| 1 | -0.65 | 4.25 | -3.21 | 6.02 | -4.42 | 3.71 | O |
| 2 | -2.13 | 4.55 | -4.04 | 3.83 | -5.63 | 2.96 | O |
| 3 | -2.71 | 3.11 | -5.22 | 2.14 | -6.54 | 2.44 | O |
| 4 | -2.33 | 4.44 | -4.10 | 5.25 | -5.63 | 4.33 | O |
| 5 | -0.46 | 4.88 | -1.41 | 5.01 | -3.44 | 4.70 | O |
| 6 | -1.03 | 3.88 | -3.25 | 5.15 | -4.36 | 5.22 | O |
| 7 | 6.87 | 10.02 | 4.21 | 11.21 | 2.06 | 6.07 | X |
| 8 | 4.22 | 9.66 | 3.12 | 10.84 | 0.42 | 5.05 | X |
| 9 | 7.62 | 11.44 | 5.64 | 12.04 | 1.92 | 5.40 | X |
| 10 | 4.81 | 9.71 | 4.31 | 11.04 | 0.78 | 4.48 | X |
| 11 | -2.75 | 4.55 | -11.22 | 6.87 | -14.25 | 5.36 | X |
| 12 | -1.96 | 14.22 | -7.46 | 29.66 | -11.37 | 38.84 | X |
| 13 | 0.27 | 19.33 | -4.56 | 38.41 | -7.25 | 49.14 | X |
| 14 | 4.23 | 11.23 | 2.95 | 6.22 | 1.02 | 4.60 | X |
| 15 | 3.85 | 10.05 | 3.10 | 7.15 | 1.30 | 5.56 | X |
| 16 | 11.56 | 21.22 | 7.52 | 18.23 | 4.12 | 9.47 | X |
| 17 | 9.22 | 16.50 | 8.14 | 15.30 | 6.10 | 7.91 | X |

*1: Evaluation of variation in length was carried out as follows:
O: (-7 to 10)x$10^{-4}$ at all temperatures and humidities
X: others

Table 8

Results of tests on setting time, compression strength, surface strength, waterproofness (20°C)

| | Setting time (min.) | | *1 Evaluation | Compression strength ($kgf/cm^2$) | | *2 Evaluation | Surface strength ($kgf/cm^2$) | | *3 Evaluation | Water resistance (%) | *4 Evaluation |
|---|---|---|---|---|---|---|---|---|---|---|---|
| | Start | End | | day 7 | day 28 | | day 14 | day 28 | | day 28 | |
| Examples | | | | | | | | | | | |
| 1 | 710 | 920 | 0 | 240 | 305 | 0 | 12.2 | 13.4 | 0 | 102 | 0 |
| 2 | 635 | 820 | 0 | 286 | 332 | 0 | 14.6 | 15.2 | 0 | 112 | 0 |
| 3 | 585 | 770 | 0 | 295 | 325 | 0 | 13.8 | 14.8 | 0 | 126 | 0 |
| 4 | 615 | 790 | 0 | 292 | 341 | 0 | 15.6 | 16.1 | 0 | 116 | 0 |
| 5 | 575 | 775 | 0 | 315 | 351 | 0 | 17.2 | 17.6 | 0 | 121 | 0 |
| 6 | 600 | 790 | 0 | 298 | 336 | 0 | 14.9 | 15.8 | 0 | 114 | 0 |
| 7 | 565 | 780 | 0 | 325 | 347 | 0 | 16.4 | 17.0 | 0 | 118 | 0 |
| 8 | 775 | 990 | 0 | 225 | 285 | 0 | 12.6 | 14.1 | 0 | 108 | 0 |
| 9 | 710 | 905 | 0 | 248 | 328 | 0 | 14.1 | 16.2 | 0 | 118 | 0 |
| 10 | 780 | 1000 | 0 | 230 | 292 | 0 | 13.0 | 14.4 | 0 | 106 | 0 |
| 11 | 725 | 930 | 0 | 253 | 312 | 0 | 14.3 | 15.4 | 0 | 114 | 0 |
| 12 | 735 | 980. | 0 | 232 | 317 | 0 | 13.8 | 15.2 | 0 | 117 | 0 |
| 13 | 555 | 705 | 0 | 320 | 341 | 0 | 15.4 | 16.7 | 0 | 110 | 0 |
| 14 | 565 | 720 | 0 | 317 | 336 | 0 | 15.5 | 16.2 | 0 | 113 | 0 |
| 15 | 590 | 740 | 0 | 330 | 345 | 0 | 14.8 | 15.8 | 0 | 112 | 0 |
| 16 | 585 | 735 | 0 | 321 | 342 | 0 | 15.2 | 15.8 | 0 | 114 | 0 |
| 17 | 615 | 805 | 0 | 318 | 336 | 0 | 15.8 | 16.7 | 0 | 116 | 0 |
| 18 | 530 | 690 | 0 | 315 | 366 | 0 | 16.1 | 17.8 | 0 | 112 | 0 |
| 19 | 535 | 685 | 0 | 310 | 338 | 0 | 14.2 | 15.8 | 0 | 114 | 0 |
| 20 | 565 | 725 | 0 | 318 | 325 | 0 | 15.1 | 16.0 | 0 | 113 | 0 |

| | | | | | | | | | | | |
|---|---|---|---|---|---|---|---|---|---|---|---|
| Comparative Examples | | | | | | | | | | | |
| 1 | 1015 | 1480 | 0 | 135 | 174 | X | 5.2 | 6.0 | 0 | 104 | 0 |
| 2 | 900 | 1210 | X | 163 | 211 | X | 7.4 | 7.7 | 0 | 108 | 0 |
| 3 | 820 | 1075 | 0 | 190 | 242 | X | 8.2 | 8.4 | 0 | 117 | 0 |
| 4 | 2245 | 2960 | X | 13 | 42 | X | 0.1 | 1.0 | X | 11 | x |
| 5 | 325 | 390 | X | 269 | 321 | 0 | 12.1 | 13.8 | 0 | 35 | x |
| 6 | 940 | 1185 | 0 | 166 | 223 | X | 7.8 | 8.6 | 0 | 85 | x |
| 7 | 685 | 860 | 0 | 268 | 342 | 0 | 14.6 | 16.2 | 0 | 112 | 0 |
| 8 | 710 | 895 | 0 | 270 | 328 | 0 | 13.0 | 14.1 | 0 | 104 | 0 |
| 9 | 380 | 465 | X | 330 | 352 | 0 | 15.4 | 16.4 | 0 | 108 | 0 |
| 10 | 365 | 475 | X | 315 | 330 | 0 | 14.6 | 16.0 | 0 | 103 | 0 |
| 11 | 820 | 1145 | 0 | 265 | 310 | 0 | 14.8 | 15.6 | 0 | 126 | 0 |
| 12 | 795 | 1115 | 0 | 278 | 322 | 0 | 14.6 | 15.2 | 0 | 124 | 0 |
| 13 | 770 | 1105 | 0 | 283 | 312 | 0 | 13.8 | 14.0 | 0 | 122 | 0 |
| 14 | 315 | 370 | X | 301 | 315 | 0 | 14.6 | 15.2 | 0 | 111 | 0 |
| 15 | 275 | 330 | X | 298 | 310 | 0 | 13.1 | 13.8 | 0 | 108 | 0 |
| 16 | 225 | 270 | X | 286 | 292 | 0 | 10.3 | 11.2 | 0 | 21 | X |
| 17 | 190 | 215 | X | 276 | 280 | 0 | 9.1 | 9.6 | 0 | 18 | X |

*1: For evaluation of setting time,

0: setting did not start before 480 minutes and ended before 1200 minutes, X: others

*2: For evaluation of compression strength,

0: not less than 200 $kgf/cm^2$ on day 7, and not less than 250 $kgf/cm^2$ on day 28, X: others

*3: For evaluation of surface strength,

0: not less than 5 $kgf/cm^2$ on day 14, X: others

*4: For evaluation of waterproofness, 0: 100%, X: others

Table 9

Results of tests on cracks and separation (20° C)

| | Thickness:10 mm | | Thickness: 40 mm | | *1 Evaluation |
|---|---|---|---|---|---|
| | Cracks | Separation | Cracks | Separation | |
| Examples | | | | | |
| 1 | None | None | None | None | O |
| 2 | None | None | None | None | O |
| 3 | None | None | None | None | O |
| 4 | None | None | None | None | O |
| 5 | None | None | None | None | O |
| 6 | None | None | None | None | O |
| 7 | None | None | None | None | O |
| 8 | None | None | None | None | O |
| 9 | None | None | None | None | O |
| 10 | None | None | None | None | O |
| 11 | None | None | None | None | O |
| 12 | None | None | None | None | O |
| 13 | None | None | None | None | O |
| 14 | None | None | None | None | O |
| 15 | None | None | None | None | O |
| 16 | None | None | None | None | O |
| 17 | None | None | None | None | O |
| 18 | None | None | None | None | O |
| 19 | None | None | None | None | O |
| 20 | None | None | None | None | O |
| Comparative Examples | | | | | |
| 1 | None | None | None | None | O |
| 2 | None | None | None | None | O |
| 3 | None | None | None | None | O |
| 4 | Generated | Occurred | Generated | Occurred | X |
| 5 | None | None | None | None | O |
| 6 | Generated | None | Occurred | None | X |
| 7 | None | None | None | None | O |
| 8 | None | None | None | None | O |
| 9 | None | None | None | None | O |
| 10 | None | None | None | None | O |
| 11 | Generated | Occurred | Generated | Occurred | X |
| 12 | Generated | None | Generated | Occurred | X |
| 13 | Generated | None | Generated | Occurred | X |
| 14 | Generated | None | Generated | None | X |
| 15 | Generated | None | Generated | None | X |
| 16 | Generated | Occurred | Generated | Occurred | X |
| 17 | Generated | Occurred | Generated | Occurred | X |

*1: For evaluation of cracks and separation for both thicknesses of 10 mm and 40 mm,
O: No cracks or separations
X: Generation of cracks or separation

Table 10

| Results of tests on flow value and J-funnel value (5° C) | | | | | | | |
|---|---|---|---|---|---|---|---|
| Examples | Immediately after mixing | | 3 hours later | | 6 hours later | | Evaluation*1 |
| | Flow value (mm) | J-funnel value (sec.) | Flow value (mm) | J-funnel value (sec.) | Flow value (mm) | J-funnel value (see.) | |
| 21 | 228 | 23.2 | 224 | 27.0 | 223 | 33.4 | O |
| 22 | 230 | 24.2 | 227 | 29.0 | 222 | 34.2 | O |
| 23 | 228 | 25.3 | 226 | 29.8 | 220 | 35.7 | O |
| 24 | 222 | 27.0 | 219 | 33.2 | 214 | 38.8 | O |
| 25 | 225 | 26.4 | 220 | 32.4 | 217 | 36.9 | O |
| 26 | 236 | 23.8 | 222 | 29.8 | 217 | 36.2 | O |
| 27 | 235 | 20.8 | 230 | 23.9 | 226 | 28.0 | O |
| 28 | 226 | 25.8 | 223 | 29.0 | 220 | 36.4 | O |
| 29 | 237 | 20.9 | 228 | 25.1 | 224 | 29.4 | O |
| 30 | 227 | 24.6 | 221 | 30.6 | 218 | 37.0 | O |
| Comparative Examples | | | | | | | |
| 18 | 222 | 25.2 | 210 | 32.4 | 198 | 42.1 | X |
| 19 | 221 | 23.4 | 203 | 35.7 | 191 | 44.4 | X |
| 20 | 219 | 24.9 | 202 | 36.0 | 188 | 46.8 | X |
| 21 | 218 | 26.5 | 202 | 36.2 | 185 | 48.9 | X |
| 22 | 218 | 29.6 | 199 | 38.0 | 187 | 50.0 | X |
| 23 | 215 | 29.9 | 195 | 40.2 | 179 | 52.3 | X |
| 24 | 220 | 26.1 | 206 | 37.6 | 184 | 47.6 | X |
| 25 | 224 | 24.2 | 212 | 35.4 | 198 | 42.2 | X |
| 26 | 226 | 23.1 | 225 | 26.2 | 222 | 30.1 | O |

*1: In Table 10, evaluation of flow values and J-fennel values was carried out as follows:
O: flow value was not less than 200 mm and J-funnel value was not greater than 40 seconds after 6 hours has elapsed.
X: others

Table 11

| Results of tests on flow value and J-funnel value (20° C) | | | | | | | |
|---|---|---|---|---|---|---|---|
| Examples | Immediately after mixing | | 3 hours later | | 6 hours later | | Evaluation*1 |
| | Flow value (mm) | J-funnel value (see.) | Flow value (mm) | J-funnel value (see.) | Flow value (mm) | J-funnel value (see.) | |
| 21 | 224 | 21.6 | 222 | 22.3 | 221 | 24.0 | O |
| 22 | 226 | 21.6 | 225 | 23.0 | 223 | 25.7 | O |
| 23 | 225 | 22.4 | 225 | 25.7 | 221 | 27.9 | O |
| 24 | 223 | 24.1 | 219 | 26.6 | 216 | 29.4 | O |
| 25 | 223 | 23.8 | 220 | 26.1 | 218 | 28.6 | O |
| 26 | 230 | 21.2 | 231 | 24.2 | 228 | 27.8 | O |
| 27 | 238 | 19.6 | 235 | 20.2 | 230 | 23.4 | O |
| 28 | 224 | 24.2 | 220 | 26.2 | 215 | 31.8 | O |
| 29 | 237 | 19.2 | 232 | 21.7 | 230 | 24.5 | O |
| 30 | 225 | 25.0 | 221 | 27.9 | 217 | 32.6 | O |
| Comparative Examples | | | | | | | |
| 18 | 224 | 22.4 | 216 | 26.1 | 211 | 29.4 | O |
| 19 | 227 | 21.0 | 214 | 25.7 | 209 | 29.6 | O |
| 20 | 224 | 22.9 | 210 | 28.6 | 202 | 32.8 | O |
| 21 | 220 | 25.3 | 207 | 30.2 | 199 | 35.2 | X |
| 22 | 220 | 25.9 | 205 | 31.8 | 198 | 37.8 | X |
| 23 | 218 | 27.2 | 203 | 34.2 | 194 | 39.2 | X |
| 24 | 223 | 24.4 | 210 | 27.7 | 203 | 33.2 | O |
| 25 | 223 | 26.1 | 219 | 27.8 | 214 | 33.4 | O |
| 26 | 224 | 21.2 | 221 | 23.0 | 219 | 24.6 | O |

*1: In Table 11, evaluation of flow values and J-fennel values was carried out as follows:
O: flow value was not less than 200 mm and J-funnel value was not greater than 40 seconds after 6 hours has elapsed.
X: others

Table 12

| Results of tests on flow value and J-funnel value (30°C) | | | | | | | |
|---|---|---|---|---|---|---|---|
| Examples | Immediately after mixing | | 3 hours later | | 6 hours later | | Evaluation*1 |
| | Flow value (mm) | J-funnel value (sec.) | Flow value (mm) | J-funnel value (sec.) | Flow value (mm) | J-funnel value (sec.) | |
| 21 | 226 | 21.4 | 227 | 24.4 | 229 | 27.9 | O |
| 22 | 229 | 21.8 | 230 | 25.1 | 232 | 27.2 | O |
| 23 | 227 | 21.9 | 229 | 26.2 | 228 | 28.6 | O |
| 24 | 224 | 23.2 | 225 | 28.3 | 223 | 30.4 | O |
| 25 | 225 | 23.0 | 227 | 27.0 | 225 | 29.0 | O |
| 26 | 232 | 23.8 | 234 | 26.3 | 226 | 29.8 | O |
| 27 | 238 | 19.0 | 237 | 20.2 | 233 | 24.4 | O |
| 28 | 229 | 22.8 | 229 | 23.4 | 227 | 26.7 | O |
| 29 | 240 | 19.5 | 237 | 20.4 | 232 | 24.3 | O |
| 30 | 230 | 23.9 | 231 | 25.7 | 227 | 28.0 | O |
| Comparative Examples | | | | | | | |
| 18 | 224 | 22.6 | 222 | 25.6 | 213 | 29.0 | O |
| 19 | 226 | 22.4 | 220 | 26.8 | 211 | 31.1 | O |
| 20 | 223 | 23.2 | 218 | 29.4 | 208 | 34.2 | O |
| 21 | 225 | 24.6 | 216 | 30.6 | 207 | 34.6 | O |
| 22 | 222 | 24.8 | 214 | 31.0 | 204 | 36.1 | O |
| 23 | 221 | 25.7 | 214 | 32.6 | 201 | 38.6 | O |
| 24 | 224 | 23.2 | 215 | 27.7 | 206 | 32.6 | O |
| 25 | 232 | 24.1 | 229 | 26.8 | 226 | 29.6 | O |
| 26 | 225 | 22.1 | 227 | 23.9 | 226 | 26.4 | O |

*1: In Table 12, evaluation of flow values and J-fennel values was carried out as follows:
O: flow value was not less than 200 mm and J-funnel value was not greater than 40 seconds after 6 hours has elapsed.
X: others

Table 13

Results of test on variation in length (Unit: x $10^{-4}$)

| | 10° C | | 20° C | | 30° C | | Evaluation*1 |
|---|---|---|---|---|---|---|---|
| | 60%H.R. | 90%H.R. | 60%H.R. | 90%H.R. | 60%H.R. | 90%H.R. | |
| Examples | | | | | | | |
| 21 | -0.64 | 6.11 | -2.88 | 6.42 | -4.10 | 4.31 | O |
| 22 | -1.45 | 4.58 | -3.50 | 4.32 | -4.95 | 2.87 | O |
| 23 | -2.04 | 3.97 | -3.80 | 4.21 | -4.81 | 2.59 | O |
| 24 | -2.20 | 3.50 | -4.17 | 3.92 | -5.30 | 2.40 | O |
| 25 | -2.38 | 3.28 | -4.25 | 3.54 | -5.54 | 2.18 | O |
| 26 | -2.05 | 3.16 | -4.66 | 2.12 | -5.63 | 2.04 | O |
| 27 | -1.62 | 4.43 | -3.88 | 4.23 | -5.21 | 2.64 | O |
| 28 | -1.50 | 4.71 | -3.51 | 4.64 | -4.96 | 2.61 | O |
| 29 | -2.13 | 3.66 | -4.76 | 2.26 | -6.04 | 1.89 | O |
| 30 | -1.88 | 3.62 | -4.23 | 2.58 | -5.91 | 2.12 | O |
| Comparative Examples | | | | | | | |
| 18 | -0.46 | 4.79 | -2.99 | 6.01 | -4.21 | 3.10 | O |
| 19 | -2.10 | 4.16 | -4.21 | 3.34 | -5.47 | 2.49 | O |
| 20 | -2.61 | 3.96 | -4.64 | 3.06 | -5.86 | 2.00 | O |
| 21 | -2.88 | 3.61 | -4.71 | 2.94 | -6.20 | 1.82 | O |
| 22 | -2.70 | 3.54 | -4.94 | 2.19 | -6.24 | 1.45 | O |
| 23 | -2.74 | 3.76 | -5.06 | 2.27 | -6.27 | 1.31 | O |
| 24 | -2.69 | 3.78 | -5.47 | 1.90 | -6.80 | 1.59 | O |
| 25 | -3.45 | 2.75 | -9.86 | 4.23 | -13.70 | 3.14 | X |
| 26 | -2.66 | 5.02 | -4.23 | 5.86 | -5.60 | 4.54 | O |

*1: In Table 13, evaluation of variation in length was carried out as follows:

O: less than -7 to 10 x$10^{-4}$ at all temperatures and humidities

X: others

Table 14

Results of tests on setting time, compression strength, surface strength, waterproofness (20°C)

| | Setting time (min.) | | *1 Evaluation | Compression strength ($kgf/cm^2$) | | *2 Evaluation | Surface strength ($kgf/cm^2$) | | *3 Evaluation | Water resistance (%) | *4 Evaluation |
|---|---|---|---|---|---|---|---|---|---|---|---|
| | Start | End | | day 7 | day 28 | | day 14 | day 28 | | day 28 | |
| Examples | | | | | | | | | | | |
| 21 | 790 | 1040 | 0 | 252 | 326 | 0 | 13.1 | 13.6 | 0 | 106 | 0 |
| 22 | 730 | 880 | 0 | 304 | 345 | 0 | 15.4 | 15.9 | 0 | 118 | 0 |
| 23 | 720 | 850 | 0 | 297 | 337 | 0 | 14.7 | 15.2 | 0 | 119 | 0 |
| 24 | 720 | 820 | 0 | 282 | 328 | 0 | 14.4 | 14.8 | 0 | 121 | 0 |
| 25 | 690 | 800 | 0 | 280 | 320 | 0 | 13.7 | 14.6 | 0 | 123 | 0 |
| 26 | 690 | 820 | 0 | 314 | 338 | 0 | 14.5 | 15.4 | 0 | 124 | 0 |
| 27 | 700 | 840 | 0 | 286 | 322 | 0 | 12.8 | 13.4 | 0 | 112 | 0 |
| 28 | 770 | 920 | 0 | 298 | 358 | 0 | 17.2 | 18.4 | 0 | 119 | 0 |
| 29 | 650 | 780 | 0 | 292 | 318 | 0 | 13.8 | 14.6 | 0 | 118 | 0 |
| 30 | 720 | 870 | 0 | 286 | 364 | 0 | 16.6 | 17.2 | 0 | 132 | 0 |
| Comparative Examples | | | | | | | | | | | |
| 18 | 1045 | 1510 | X | 144 | 185 | X | 5.2 | 6.1 | X | 101 | 0 |
| 19 | 915 | 1155 | 0 | 178 | 218 | X | 7.2 | 7.6 | X | 109 | 0 |
| 20 | 790 | 1005 | 0 | 170 | 205 | X | 6.9 | 7.4 | X | 112 | 0 |
| 21 | 725 | 985 | 0 | 158 | 207 | X | 6.1 | 7.3 | X | 115 | 0 |
| 22 | 695 | 940 | 0 | 160 | 196 | X | 6.4 | 7.4 | X | 118 | 0 |
| 23 | 695 | 895 | 0 | 148 | 180 | X | 5.3 | 6.7 | X | 119 | 0 |
| 24 | 685 | 855 | 0 | 197 | 246 | X | 8.8 | 9.2 | X | 122 | 0 |
| 25 | 640 | 780 | 0 | 265 | 318 | 0 | 13.2 | 15.4 | 0 | 123 | 0 |
| 26 | 1960 | 2450 | X | 45 | 82 | X | 0.5 | 2.3 | X | 21 | X |

*1: In Table 14, the setting time was evaluated to give a rating "O" if the start point was 480 minutes or thereafter and the end point was within 1,200 minutes. For other cases, rating "X" was given.

*2: In Table 14, the compression strength was evaluated to give a rating "O" if the compression strength was not less than 200 $kgf/cm^2$ on day 7 and not less than 250 $kgf/cm^2$ on day 28. For other cases, rating "X" was given.

*3: In Table 14, the surface strength was evaluated to give a rating "O" if it was not less than 10 $kgf/cm^2$ on day 14. For other cases, rating "X" was given.

*4: In Table 14, the waterproofing performance was evaluated to give a rating "O" if it was not less than 100%. For other cases, rating "X" was given.

Table 15

| Results of tests on crack and separation | | | | | |
|---|---|---|---|---|---|
| Examples | Thickness:10 mm | | Thickness: 40 mm | | Evaluation*1 |
| | Cracks | Separation | Cracks | Separation | |
| 21 | None | None | None | None | O |
| 22 | None | None | None | None | O |
| 23 | None | None | None | None | O |
| 24 | None | None | None | None | O |
| 25 | None | None | None | None | O |
| 26 | None | None | None | None | O |
| 27 | None | None | None | None | O |
| 28 | None | None | None | None | O |
| 29 | None | None | None | None | O |
| 30 | None | None | None | None | O |
| Comparative Examples | | | | | |
| 18 | None | None | None | None | O |
| 19 | None | None | None | None | O |
| 21 | None | None | None | None | O |
| 22 | None | None | None | None | O |
| 23 | None | None | None | None | O |
| 24 | None | None | None | None | O |
| 25 | Generated | Occurred | Generated | Occurred | X |
| 26 | Generated | Occurred | Generated | Occurred | X |

*1: In Fig. 15, cracks and separation for both thicknesses of 10 mm and 40 mm were evaluated as follows:
O: No cracks or separations
X: Geberation of cracks or separation

Industrial Applicability:

Since the self-leveling aqueous compositions according to the present invention maintain high fluidity for a long period without affected by temperature changes, it is possible to manufacture the composition in a factory, and transport it to the working site by an agitator truck for the installation on the substrate. In addition, the compositions of the present invention have excellent characteristics, that is, they exhibit excellent strength such as compression strength and surface strength, generate only very little changes in length, do not generate cracks, do not separate from the substrate, and have high waterproofing performance. Thus, the compositions of the present invention are excellent from the viewpoints of quality and working efficiency.

**Claims**

1. A self-leveling aqueous composition comprising 100 parts by weight of a base material which is a mixture of cement and natural type-II anhydrous gypsum which are mixed in a weight ratio from 40/60 to 80/20; 0.1 to 3 parts by weight of an acrylic dispersant or a dispersant mixture which contains 0.1 to 3 parts by weight of an acrylic dispersant and 0.1 to 2 parts by weight of a melamine dispersant; 0.01 to 0.6 parts by weight of a thickener; 0.01 to

0.6 parts by weight of a defoaming agent; 0.05 to 1 part by weight of a setting accelerator; 0.2 to 6 parts by weight of a shrinkage inhibitor; 30 to 300 parts by weight of an aggregate; and 30 to 60 parts by weight of water.

**2.** The self-leveling aqueous composition according to Claim 1, which is a water-soluble copolymer obtained by copolimerizing a structural unit represented by the following formula (1), a structural unit represented by the following formula (2), and a structural unit capable of being copolymerized with the monomers of formula (1) and formula (2) in a proportion of 40-80/20-60/0-20 mol%:

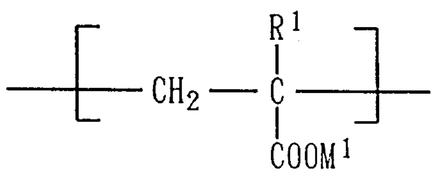

(1)

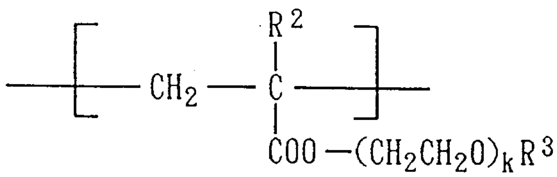

(2)

wherein $R^1$ and $R^2$ are the same or different and each represents H or $CH_3$; $R^3$ is C1-C5 alkyl; $M^1$ is an alkali metal, an alkaline earth metal, or an organic amino group; and k is an integer from 5 to 50.

**3.** The self-leveling aqueous composition according to Claim 1, wherein the acrylic dispersant is a graft copolymer constituted by structural units of the following formulas (3) to (6):

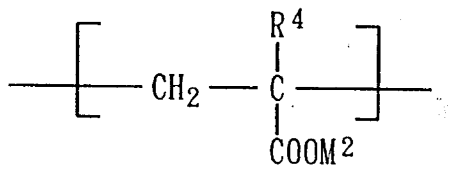

(3)

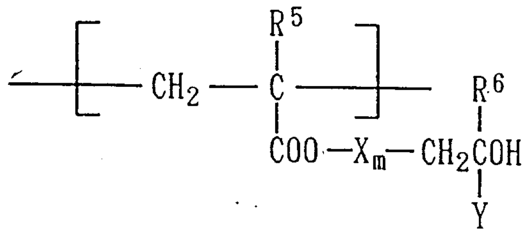

(4)

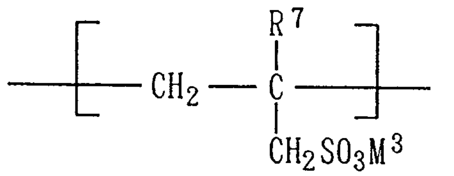

(5)

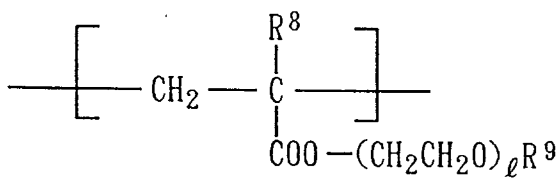

(6)

wherein $R^4$ to $R^8$ are the same or different from each other and each represents H or $CH_3$; $R^9$ is C1-C5 alkyl; $M^2$ and $M^3$ are an alkali metal; an alkaline earth metal, or an organic amino group; X is $CH_2CH_2O$ or $CH_2CH(CH_3)O$ or $CH_2$; Y is a polymer block obtained by a radical copolymerization of acrylic amide and a salt of 2-acrylamide-2-methylpropanesulfonic acid; m is an integer from 0 to 10; and 1 is an integer from 0 to 30;
with ratios of the structural units of formulas (3), (4), (5), and (6) being 40 to 80 mol%, 1 to 30 mol%, 1 to 20 mol%, and 5 to 30 mol%, respectively.

**4.** The self-leveling aqueous composition according to Claim 1, wherein the acrylic dispersant is a water-soluble vinyl copolymer obtained by a radical copolymerization, in an aqueous phase, of a structural unit represented by the following formula (7), a structural unit represented by the following formula (8), a structural unit represented by the following formula (9), a structural unit represented by the following formula (10), and a structural unit represented by the following formula (11):

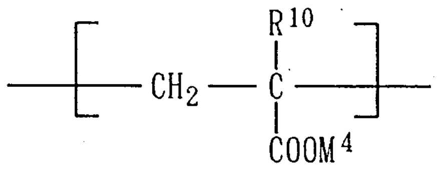
(7)

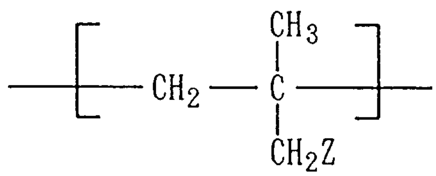
(8)

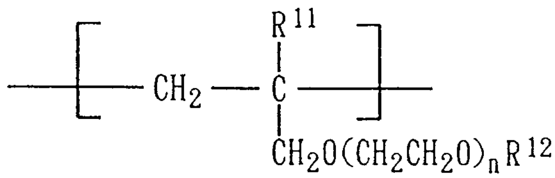
(9)

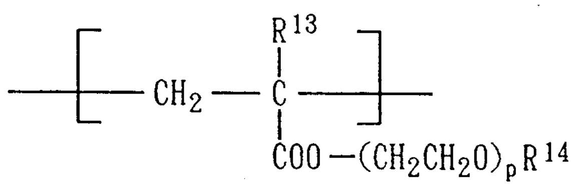
(10)

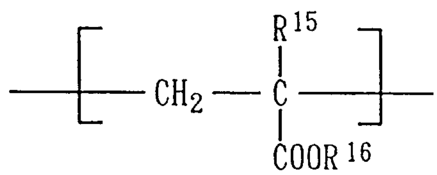
(11)

wherein $R^{10}$, $R^{11}$, $R^{12}$, $R^{13}$, $R^{15}$: H or $CH_3$; $R^{14}$, $R^{16}$: C1-C3 alkyl;
X: $-SO_3M^5$ or a group represented by the following formula (12):

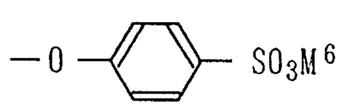
(12),

$M^4$, $M^5$, $M^6$: an alkali metal, an alkaline earth metal, ammonium or an organic amine;
n: an integer from 1 to 30; and
p: an integer from 5 to 50;
with the proportion of the structural units represented by formulas (7), (8), (9), (10), and (11) being 45-65/8-23/3-25/5-25/3-15 mol%.

5. The self-leveling aqueous composition according to any one of Claims 1 to 4, wherein the natural type-II anhydrous gypsum is such that not more than 30% by weight thereof is substituted by by-product type-II anhydrous gypsum and/or not more than 20% by weight thereof is substituted by gypsum hemihydrate.

6. A self-leveling aqueous composition, comprising 100 parts by weight of a base material which is a mixture of cement and gypsum which are mixed in a weight ratio from 40/60 to 80/20, in which the gypsum is a natural type-II anhydrous gypsum containing not more than 30% by weight of by-product anhydrous gypsum and/or not more than 20% by weight of gypsum hemihydrate; 0.1 to 3 parts by weight of an acrylic dispersant as defined in Claims 2, 3, or 4; 0.01 to 0.6 parts by weight of a thickener; 0.01 to 0.6 parts by weight of a defoaming agent; 0.05 to 1 part by weight of a setting accelerator; 0.2 to 6 parts by weight of a shrinkage inhibitor; 30 to 300 parts by weight of an aggregate; and 30 to 60 parts by weight of water.

**INTERNATIONAL SEARCH REPORT**

International application No.
PCT/JP94/01767

**A. CLASSIFICATION OF SUBJECT MATTER**

Int. $Cl^6$ C04B28/16, 24/26

According to International Patent Classification (IPC) or to both national classification and IPC

**B. FIELDS SEARCHED**

Minimum documentation searched (classification system followed by classification symbols)

Int. $Cl^6$ C04B28/16, 24/26

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP, A, 2-149457 (Ube Industries, Ltd., Mizutani Paint K.K.), June 8, 1990 (08. 06. 90), (Family: none) | 1-6 |
| A | JP, A, 3-218956 (Nippon Steel Chemical Co., Ltd.), September 26, 1991 (26. 09. 91) & JP, B, 6-102567 | 1-6 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| January 13, 1995 (13. 01. 95) | January 31, 1995 (31. 01. 95) |
| Name and mailing address of the ISA/ Japanese Patent Office | Authorized officer |
| Facsimile No. | Telephone No. |

Form PCT/ISA/210 (second sheet) (July 1992)